# EUROPEAN PATENT APPLICATION

(11) **EP 1 058 027 A2**
(43) Date of publication of application: **06.12.2000**
(21) Application number: 00110171.6
(22) Date of filing: 15.05.2000
(51) Int. Cl.: F16F 9/348, F16F 9/46

(54) **Improved hydraulic shock absorber**

(30) Priority: 18.05.1999 IT PD990105
(71) Applicant: C.D.A. -Bitubo- Di Mardollo Scipione & C. S.n.c., 35030 Rubano (Padova) (IT)
(72) Inventor: Mardollo, Gianni, 35033 Selve di Teolo (Padova) (IT)
(74) Representative: Modiano, Guido, Dr.-Ing.

(57) **Abstract**

A hydraulic shock absorber comprising a first tubular cylindrical body (11) which is closed hermetically by end closures (12, 13) and is hydraulically connected to a cup (15) which is constituted by a second tubular cylindrical body (16) which is also closed hermetically by end closures (17, 18), a through stem (19) being slidingly and axially associated with the first body, a piston (20) being fixed on the stem and forming two variable-volume chambers (21, 22) which contain an incompressible fluid. The second body slidingly contains a free partition (24) which forms two variable-volume chambers (25, 26), one of which (26) contains a compressible fluid, the other chamber (25) being connected, by means of an interposed valve, to the first body (11). The piston (20) has passages between the two chambers respectively for maximum flow and minimum flow in one direction and for flow in the opposite direction; the stem is composite and comprises, in a mutually coaxial arrangement, a first outer tubular rod-like element (29) for supporting the corresponding piston (20), a second intermediate tubular rod-like element (30), whose head acts on first means for throttling the passage that corresponds to maximum flow, and a third inner rod-like element (32), whose head (33) acts on second means (40) for throttling the passage that corresponds to minimum flow. The second and third rod-like elements are connected externally to adjustment means which are available for actuation by the user. One-way valve means are provided which act on the passage in the opposite direction.

## Description

The present invention relates to an improved hydraulic shock absorber.

Many types of motorcycle, particularly those with a large cylinder capacity for road use and/or for track competitions, have long successfully adopted hydraulic shock absorbers suitable to damp the vibrations produced by the road surface, which would otherwise be discharged onto the arms or back of the motorcyclist, thus causing driving to be tiring and wearying.

In particular, these shock absorbers currently allow to achieve particularly easy and smooth driving levels.

The most widely used shock absorber is of the hydraulic type, whose operation is based on the principle of the restrained flow of oil between two chambers into which a piston divides a tubular cylindrical body which is closed at its ends.

However, although the fluids involved are incompressible, it is known that they are subject to temperature variations and in particular, due to heating caused by restrained flow during use, to volume variations; accordingly, compensation means are provided in shock absorbers.

Moreover, the stem that supports the piston provides a different active surface of said piston for each one of the two chambers; accordingly, the compensation means must also ensure correct operation even in the presence of these differences.

In particular, the compensation means are currently constituted by a cup which is also constituted by a tubular cylindrical body which is closed hermetically by end closures and inside which a partition is slidingly accommodated; the partition forms two chambers, one of which contains a compressible fluid suitable to constitute the means for elastic return of the shock absorber to the extended condition, while the other chamber is connected, by interposing a compression valve, to the main body of the shock absorber.

Shock absorbers having a structure which is substantially similar to the above-described one are currently used effectively but are not free from drawbacks.

In particular it is known that shock absorber manufacturers, for the sake of economy in production, must make provisions so that a same shock absorber model can be adapted to a plurality of motorcycle models after adjusting its overall stiffness.

Accordingly, commercially available shock absorbers, in order to be commercially competitive, must provide stiffness adjustment.

In particular, stiffness is adjusted in hydraulic shock absorbers by adjusting the oil flow section.

Currently, in conventional shock absorbers this adjustment is only partial and for some particular situations it must be performed by disassembling the shock absorber after removing it from the vehicle and draining it, consequently requiring reassembly and refilling with the incompressible fluid.

Clearly, this operation can be performed only by expert personnel or in any case by a user who has a good technical background as well as appropriate equipment.

Moreover, in any case the operation is time-consuming and labor-intensive and suffers drawbacks, especially in the reassembly of the shock absorber.

Accordingly, a hydraulic shock absorber, disclosed in Italian Patent Application No. PD97A000201 dated 15 September 1997 in the name of this same Applicant, has recently been devised which comprises a first tubular cylindrical body which is closed hermetically by end closures and is hydraulically connected to a cup which is constituted by a second tubular cylindrical body which is also closed hermetically by end closures.

A through stem is axially and slidingly associated with the first body, and a piston which forms two chambers is fixed thereon.

The piston and the stem have passages for the restrained flow, between the two chambers, of an incompressible fluid contained therein, and the second body slidingly contains a free partition which forms two variable-volume chambers; one of the chambers contains a compressible fluid, while the other one is connected to the first body by means of an interposed valve.

This shock absorber is characterized by the fact that the stem is composite, since it comprises, in a mutually coaxial arrangement, a first outer tubular rod-like element for supporting the corresponding piston, a second intermediate tubular rod-like element whose head is connected so as to act on first maximum-flow throttling means, and a third inner rod-like element whose shaped head acts so as to provide throttling on a corresponding minimum-flow port.

The second and third elements form, as a whole, coaxial means which are externally available to the action of the user and are adapted to adjust the restrained flow of the incompressible fluid and therefore the overall damping of the shock absorber.

The valve of the second tubular body is associated with an inner coaxial shaft, which is fixed to one of the ends the second body, and the shaft is composite and constituted by a fourth outer tubular rod-like element, which is operatively connected to second maximum-flow throttling means, and by a fifth internal rod-like element which has a shaped head and is suitable to throttle a corresponding minimum-flow port.

Although it solves the problems observed in the above-described types of shock absorber, this latter shock absorber in turn has shown drawbacks, including a certain difficulty in dimensioning owing to the limited internal space available.

The aim of the present invention is to provide a hydraulic shock absorber for which the drawbacks of conventional types are solved and in which it is possible to adjust overall stiffness without having to disassemble it or in any case drain it of the incompressible fluid contained therein.

Within the scope of this aim, an object of the present invention is to provide a shock absorber in which stiffness adjustment can be performed even by a user who has no particular technical skills.

A further object of the present invention is to provide a shock absorber which allows fine adjustment of stiffness.

A further object of the present invention is to provide a shock absorber which is particularly flexible and adaptable to a plurality of motorcycles and to a plurality of operating conditions.

A further object of the present invention is to provide a shock absorber whose costs are competitive with respect to conventional shock absorbers.

A still further object of the present invention is to provide a shock absorber which is reliable and can be manufactured with currently commercially available technologies.

These and other objects which will become better apparent hereinafter are achieved by a hydraulic shock absorber according to the present invention which comprises a first tubular cylindrical body which is closed hermetically by end closures and is hydraulically connected to a cup which is constituted by a second tubular cylindrical body which is also closed hermetically by end closures, a through stem being slidingly and axially associated with said first body, a piston being fixed on said stem and forming two variable-volume chambers which contain an incompressible fluid, said second body slidingly containing a free partition which forms two variable-volume chambers, one of said chambers containing a compressible fluid, the other chamber being connected, by means of an interposed valve, to said first body, characterized in that said piston has passages between the two chambers respectively for maximum flow and minimum flow in one direction and for flow in the opposite direction, said stem being composite and comprising, in a mutually coaxial arrangement, a first outer tubular rod-like element for supporting the corresponding piston, a second intermediate tubular rod-like element, whose head acts on first means for throttling the passage that corresponds to maximum flow, and a third inner rod-like element, whose head acts on second means for throttling the passage that corresponds to minimum flow, said second and third rod-like elements being connected externally to adjustment means which are available for actuation by the user, one-way valve means being provided which act on the passage in the opposite direction.

Further characteristics and advantages of the present invention will become better apparent from the following detailed description of an embodiment thereof, illustrated only by way of non-limitative example in the accompanying drawings, wherein:
Figure 1 is a partially sectional orthographic projection view of a shock absorber according to the present invention;

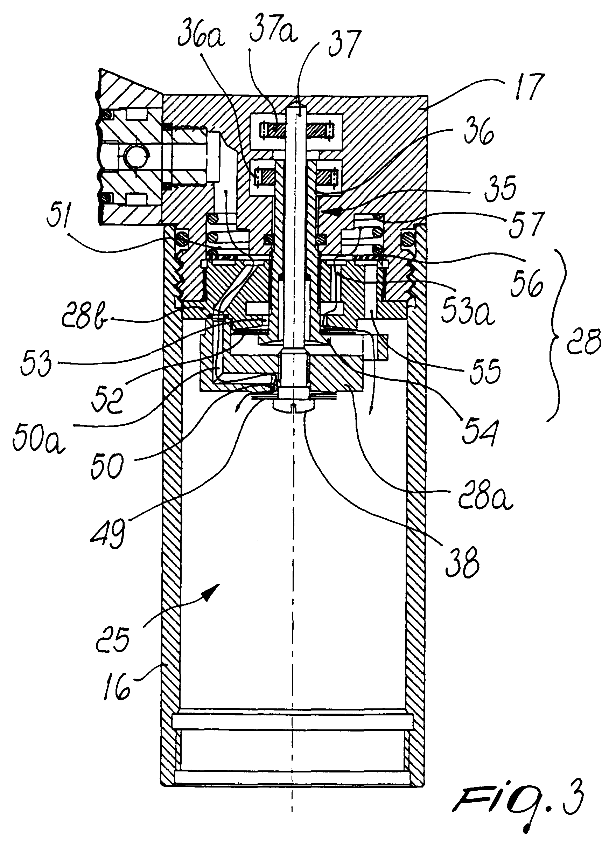

Figures 2 and 3 are enlarged-scale sectional orthographic projection views of a portion of the shock absorber of Figure 1.

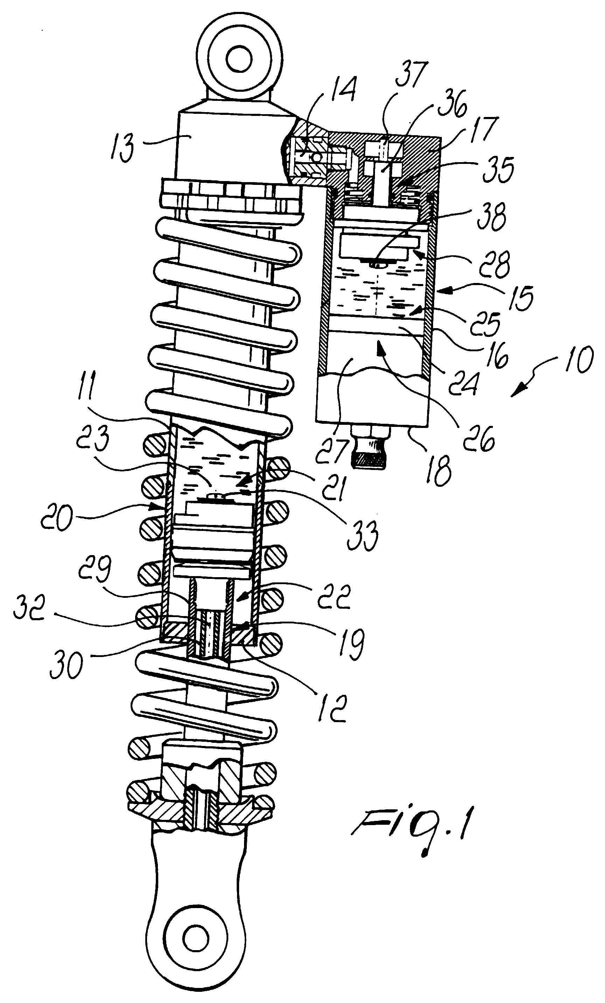

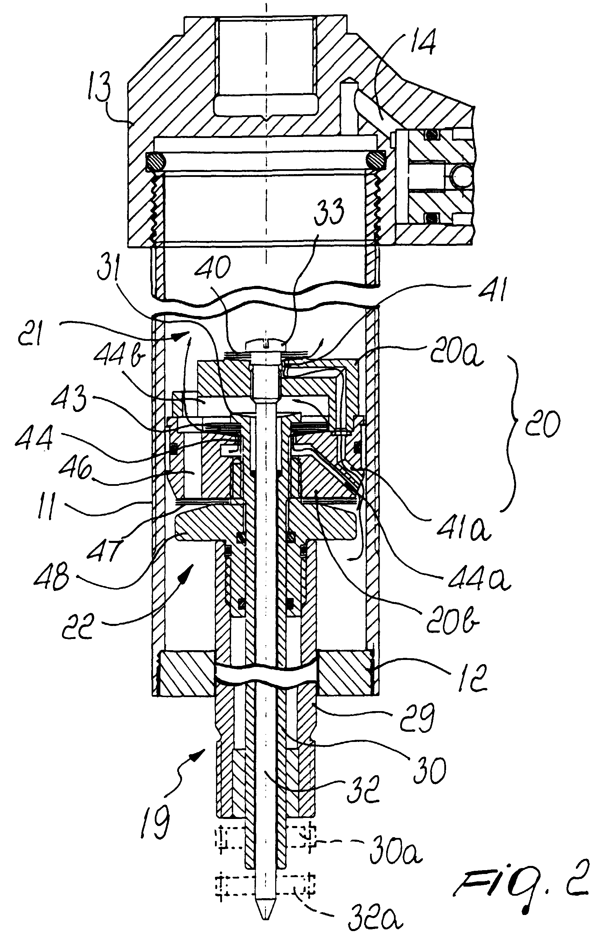

With particular reference to Figures 1 to 2, a hydraulic shock absorber according to the present invention is generally designated by the reference numeral 10.

The shock absorber 10 comprises a first tubular cylindrical body 11 which is closed hermetically by end closures, designated by the reference numerals 12 and 13 respectively, and is hydraulically connected, by means of a duct 14, to a compensation cup 15 which is constituted by a second tubular cylindrical body 16 which is also closed hermetically by end closures, designated by the reference numerals 17 and 18 respectively.

A composite through stem 19 is slidingly and axially associated with the first body 11, and a piston 20 is fixed thereon which forms two variable-volume chambers, designated by the reference numerals 21 and 22 respectively.

The piston 20, formed by two parts 20a and 20b which are aligned and packed along the axis of the stem 19, as specified hereinafter, has passages, described in greater detail hereinafter, between the chambers 21 and 22 for an incompressible fluid such as oil, designated by the reference numeral 23, which is contained in the chambers.

A free partition 24 is slidingly contained in the second body 16 and also forms two variable-volume chambers, designated by the reference numerals 25 and 26 respectively; one of the chambers, designated by the reference numeral 26, contains a compressible fluid, such as compressed nitrogen gas, while the other chamber 25 is connected to the first body 11 and particularly to the chamber 21 by means of an interposed valve 28 which acts by compression and is fixed in an annular seat formed in cooperation between the internal surface of the second cylindrical body 16 and the end closure 17.

The stem 19, as mentioned, is composite and comprises, in a mutually coaxial arrangement, a first outer tubular rod-like element 29 for supporting the corresponding piston 20, a second intermediate tubular rod-like element 30, which acts on maximum-flow throttling means, also described in greater detail hereinafter, and a third inner rod-like element 32, whose head 33 is connected so as to act on minimum-flow throttling means, also described in greater detail hereinafter.

The second rod-like element 30 and the third rod-like element 32 form, as a whole, coaxial means; the adjustments of the restrained flow of the incompressible fluid 23 and therefore of the overall stiffness of the shock absorber 10 are externally available to the action of the user by virtue of said means, by means of kinematic systems of the worm screw type 30a and 32a which protrude from the closure 12.

The valve 28 (in two coaxial aligned parts 28a and 28b) of the second body 16, in this case, is associated with a coaxial composite shaft 35, which is rigidly coupled, at one of its ends, to the closure 17 of the second body 16.

In particular, the shaft 35 is constituted by a fourth outer tubular rod-like element 36 which is connected so as to act on maximum-flow throttling means, described in greater detail hereinafter, and a fifth inner rod-like element 37, whose head 38 is connected so as to act on minimum-flow throttling means which are also described in greater detail hereinafter.

The shaft 35, by means of kinematic systems 36a and 37a of the worm-screw type, also makes the flow adjustments available to the user.

The minimum-flow throttling means of the piston 20 comprise one or more flexible disks 40 (which the mushroom-shaped head 33 of the third element 32 packs against the piston 20), with an inner part which is superimposed on an annular coaxial port 41 formed in the part 20a of the piston 20.

The port 41 is connected to the chamber 22 by means of a passage 41a formed in the piston 20.

Also the maximum-flow throttling means of the piston 20 are constituted by one or more flexible disks 43, which are packed so that the inner part is superimposed on an annular and coaxial port 44 which is formed in the part 20b.

In this case, the second rod-like element 30 has a head 31 with a lip which engages the inner part of the corresponding disks 43 opposite the corresponding port 44.

The port 44 is connected to the chamber 22 by means of a passage 44a formed in the piston 20.

A passage 44b toward the chamber 21 is also formed between the head 31 of the second element 30 and the part 20a.

A separate passage 46 for flow from the chamber 21 to the chamber 22 (in the opposite direction with respect to the preceding flows) is provided in the piston 20 in cooperation with a one-way valve with disks 47 which are similar to the preceding ones and are packed between the piston 20 and a mushroom-shaped head 48 screwed inside the first rod-like element 29.

Sealing rings, not designated by reference numerals, are provided between the various components that move with respect to each other.

The minimum-flow throttling means of the valve 28 comprise one or more flexible disks 49 (which the mushroom-head 38 of the fifth element 37 packs against the valve 28), with an internal part which is superimposed on an annular and coaxial port 50 formed in the part 28a of the valve 28.

The port 50 is connected to a chamber 51 which lies opposite the chamber 25 by means of a passage 50a formed in the valve 28.

Also the maximum flow-throttling means of the valve 28 are constituted by one or more flexible disks 52 which are packed so that the inner part is superimposed on an annular and coaxial port 53 formed in the part 28b.

In this case, the fourth rod-like element 36 has a head 54 with a lip which engages the inner part of the corresponding disks 52 opposite the corresponding port 53.

The port 53 is connected to the chamber 51 by means of a passage 53a formed in the valve 28.

A passage 53b toward the chamber 25 is also formed between the head 54 of the fourth element 36 and the part 28a.

A separate passage 55 for flow from the chamber 25 to the chamber 51 (in the opposite direction with respect to the preceding flows) is provided in the valve 28 in cooperation with a one-way valve which has disks 56 which are similar to the preceding ones and are packed by a spring 57 arranged in the chamber 51 between the valve 28 and the closure 17.

Sealing rings, not designated by a reference numeral, are provided between the various components that move with respect to each other.

At this point it should be observed that a bush 58, in which the passage 59 between the first body 11 and second body 16 is formed, is rigidly screwed by means of a threaded protrusion 58 in the closure 17 in a radial arrangement and is inserted in a hollow protrusion 60 of the closure 13.

Annular gaskets 61 are provided for sealing.

The coupling, which can be locked by means of at least one radial screw 62 which passes through the protrusion 60 and abuts against the bush 58, allows to adjust the mutual angle between the first body 11 and the second body 16.

In practice it is noted that the present invention has achieved the intended aim and objects.

It should in fact be observed that for the user the adjustment means are entirely external and therefore can be operated by screwing and unscrewing the various rod-like elements so as to preload more or less intensely the flexible elements without having to disassemble the shock absorber.

It is also noted that it is possible to achieve a particularly fine adjustment of the overall stiffness of the shock absorber, since it is possible to act separately both on the maximum flow and on the minimum flow.

It should also be observed that all the flows are regulated by flexible elements and that dedicated passages are provided for flows in the opposite direction.

Attention is also drawn to the operating simplicity of the adjustment, which requires absolutely no particular technical skills.

It is also particularly important that the particular construction of the shock absorber makes it dimensionally more flexible due to the greater space available for the various passages, throttling means and adjustment means.

Attention is further drawn to the constructive flexibility of the shock absorber according to the present invention and to the possibility to apply it to various types of motorcycle and applications.

The present invention is susceptible of numerous modifications and variations, all of which are within the scope of the inventive concept; likewise, the details may be replaced with other technically equivalent elements.

The materials and the dimensions may be any according to requirements.

The disclosures in Italian Patent Application No. PD99A000105 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A hydraulic shock absorber comprising a first tubular cylindrical body which is closed hermetically by end closures and is hydraulically connected to a cup which is constituted by a second tubular cylindrical body which is also closed hermetically by end closures, a through stem being slidingly and axially associated with said first body, a piston being fixed on said stem and forming two variable-volume chambers which contain an incompressible fluid, said second body slidingly containing a free partition which forms two variable-volume chambers, one of said chambers containing a compressible fluid, the other chamber being connected, by means of an interposed valve, to said first body, characterized in that said piston has passages between the two chambers respectively for maximum flow and minimum flow in one direction and for flow in the opposite direction, said stem being composite and comprising, in a mutually coaxial arrangement, a first outer tubular rod-like element for supporting the corresponding piston, a second intermediate tubular rod-like element, whose head acts on first means for throttling the passage that corresponds to maximum flow, and a third inner rod-like element, whose head acts on second means for throttling the passage that corresponds to minimum flow, said second and third rod-like elements being connected externally to adjustment means which are available for actuation by the user, one-way valve means being provided which act on the passage in the opposite direction.

2. The shock absorber according to claim 1, characterized in that said valve of said second tubular body is associated with an internal coaxial shaft which is fixed to one of the ends of said second body, said shaft being composite and being constituted by a fourth outer tubular rod-like element, which is operatively connected to second maximum-flow throttling means, and a fifth internal rod-like element which has a shaped head and is suitable to throttle a corresponding minimum-flow port.

3. The shock absorber according to one or more of the preceding claims, characterized in that said piston is formed by two parts which are aligned and packed along the axis of said stem.

4. The shock absorber according to one or more of the preceding claims, characterized in that said second rod-like element and said third rod-like element form, as a whole, coaxial means which, by means of kinematic systems of the worm-screw type which protrude from the closure, allow the adjustments of the flow of the incompressible fluid and therefore of the overall stiffness of the shock absorber to be available to the action of the user.

5. The shock absorber according to one or more of the preceding claims, characterized in that said valve is formed by two coaxial aligned parts and is associated with a composite coaxial shaft which is rigidly coupled at one of its ends to the closure of said second body.

6. The shock absorber according to one or more of the preceding claims, characterized in that said shaft is constituted by a fourth outer tubular rod-like element which is connected so as to act on maximum-flow throttling means and a fifth inner rod-like element whose head is connected so as to act on minimum-flow throttling means.

7. The shock absorber according to one or more of the preceding claims, characterized in that said shaft makes the flow adjustments available to the user by means of worm-screw kinematic systems.

8. The shock absorber according to one or more of the preceding claims, characterized in that said minimum-flow throttling means of the piston comprise one or more flexible disks, which the mushroom-shaped head of said third element packs against said piston, the inner part of said disks being superimposed on an annular and coaxial port formed in the corresponding part of said piston.

9. The shock absorber according to one or more of the preceding claims, characterized in that said minimum-flow port is connected to the chamber that is not affected by said stem by means of a passage formed in said piston.

10. The shock absorber according to one or more of the preceding claims, characterized in that said maximum-flow throttling means of said piston are constituted by one or more flexible disks which are packed so that the inner part is superimposed on an annular and coaxial port formed in the corresponding part of said piston, said second rod-like element having a head with a lip which engages the inner part of the corresponding disks opposite the corresponding port.

11. The shock absorber according to one or more of the preceding claims, characterized in that said maximum-flow port is connected, by means of a passage formed in said piston, to the chamber that is not affected by said stem.

12. The shock absorber according to one or more of the preceding claims, characterized in that a separate passage from the chamber that is not affected by said stem to the other chamber is provided in said piston in cooperation with said one-way valve and with flexible disks which are packed between said piston and a mushroom-shaped head which is connected to said first rod-like element.

13. The shock absorber according to one or more of the preceding claims, characterized in that said minimum-flow throttling means of said valve comprise one or more flexible disks, which the mushroom-shaped head of said fifth rod-like element packs against said valve, the inner part being superimposed on an annular coaxial port formed in said valve.

14. The shock absorber according to one or more of the preceding claims, characterized in that said minimum-flow port of said valve is connected to a chamber which lies opposite the one in which said partition acts by means of a passage formed in said valve.

15. The shock absorber according to one or more of the preceding claims, characterized in that said maximum-flow throttling means of the valve are constituted by one or more flexible disks which are packed so that the inner part overlaps an annular coaxial port formed in said valve, said fourth rod-like element having a head with a lip which engages the inner part of the corresponding disks opposite the corresponding port.

16. The shock absorber according to one or more of the preceding claims, characterized in that said maximum-flow port is connected by means of a passage, formed in said valve, to the chamber for connection to said first body.

17. The shock absorber according to one or more of the preceding claims, characterized in that a separate passage for flow from the chamber affected by said partition to the chamber for connection to said first body is formed in said valve in cooperation with a one-way valve with disks which are packed by a spring which is arranged in said connecting chamber, between said valve and the corresponding closure.

18. The shock absorber according to one or more of the preceding claims, characterized in that a bush, in which the passage between said first body and said second body is provided, is radially rigidly coupled to the corresponding closure of one of the bodies and is inserted in a hollow protrusion of the corresponding closure of the other body, annular gaskets being provided in order to produce a seal and at least one screw being further provided for mutual locking.
